# EUROPEAN PATENT APPLICATION

(11) **EP 4 815 102 A1**
(43) Date of publication of application: **30.09.2026**
(21) Application number: 23959280.1
(22) Date of filing: 24.11.2023
(51) Int. Cl.: H01M 10/48, G01K 1/14

(54) **BATTERY MODULE, BATTERY PACK, AND ELECTRICAL DEVICE**

(71) Applicant: Xiamen Ampack Technology Limited, Xiamen City, Fujian Province, 361000 (CN)
(72) Inventor: LI, Kunlong, Xiamen, Fujian 361000 (CN); NONG, Wenbin, Xiamen, Fujian 361000 (CN); WANG, Pengfei, Xiamen, Fujian 361000 (CN)
(74) Representative: Kraus & Lederer PartGmbB
(86) International application number: PCT/CN2023/134096
(87) International publication number: WO 2025/107311

(57) **Abstract**

This application provides a battery module, a battery pack, and an electric device. The battery module includes a housing, a battery cell assembly, and a temperature detection member. The housing is provided with a first space. The battery cell assembly is disposed in the first space, the battery cell assembly includes a plurality of battery cell units, the battery cell unit includes and a bracket, the battery cell includes a battery cell housing, and the bracket wraps at least a part of the battery cell housing. The temperature detection member is disposed on the bracket.

## Description

### TECHNICAL FIELD

This application relates to the field of battery technologies, and in particular, to a battery module, a battery pack, and an electric device.

### BACKGROUND

A battery module typically generates heat during use, and if the heat is excessive, the battery module may experience thermal runaway, affecting normal use of the battery module.

### SUMMARY

This application provides a battery module, a battery pack, and an electric device, to improve temperature detection accuracy of the battery module and reduce a thermal runaway possibility of the battery module.

According to a first aspect, an embodiment of this application provides a battery module, including a housing, a battery cell assembly, and a temperature detection member. The housing is provided with a first space. The battery cell assembly is disposed in the first space, the battery cell assembly includes a plurality of battery cell units, the battery cell unit includes a battery cell and a bracket, the battery cell includes a battery cell housing, and the bracket wraps at least a part of the battery cell housing. The temperature detection member is disposed on the bracket.

The housing can play a role in protecting the battery cell assembly and preventing dust. The bracket can bear force before the battery cell, playing a role in protecting the battery cell. In this way, a position of the temperature detection member is stable, and a probability of the temperature detection member moving relative to the battery cell is reduced, so that a temperature value of the battery cell detected by the temperature detection member is accurate. This helps accurately control charging and discharging of the battery cell based on the temperature value of the battery cell, and reduce a possibility of damage or failure of the battery module caused by thermal runaway of the battery cell.

In the above one or more optional implementations, the battery cell further includes an electrode terminal, the battery cell housing includes a main body portion and a first sealing portion, and the electrode terminal facing away from of the battery cell housing from the first sealing portion; and the bracket covers at least a part of the first sealing portion, and the electrode terminal extends out from the bracket.

When at least a part of the first sealing portion bears force, the bracket bears force before the first sealing portion, playing a role in protecting the first sealing portion. In addition, the bracket improves sealing strength of the first sealing portion, causing a low probability of the first sealing portion breaking when the battery cell has not experienced thermal runaway. In this way, a temperature detected by the temperature detection member is close to a temperature of the electrode terminal, and this helps improve detection precision of the temperature of the battery cell and reflect an actual temperature of the battery cell.

In the above one or more optional implementations, the bracket includes a first portion, the first sealing portion includes an end portion, the end portion being facing away from the main body portion, and the first portion covers at least a part of the end portion; and the temperature detection member is disposed on the first portion.

When at least a part of the end portion bears force, the first portion bears force before the end portion, so that the first portion plays a role in protecting the end portion. In addition, the first portion improves sealing strength of the first sealing portion, causing a low probability of the end portion breaking when the battery cell has not experienced thermal runaway. When the battery cell expands, action force exerted by the battery cell on the temperature detection member is small, and a probability of damage to the battery cell and the temperature detection member is low. Moreover, after the plurality of battery cell units are assembled into the battery cell assembly, this also helps assemble the temperature detection member onto the battery cell.

In the above one or more optional implementations, the first portion includes a main body and a protrusion, the protrusion protrudes from the main body, and the main body covers the end portion; and the temperature detection member is disposed on the protrusion.

The temperature detection member detect heat directly transmitted by the electrode terminal through the protrusion, with a low heat loss and a small impact on energy density of the battery module.

In the above one or more optional implementations, the protrusion is provided with a recess, and the temperature detection member is disposed in the recess.

The temperature detection member obtains, through detection, heat directly transmitted by the electrode terminal through the protrusion, with a low heat loss and a small impact on energy density of the battery module.

In the above one or more optional implementations, the electrode terminal includes a first section, and the first section is connected to the protrusion; and the first section includes a first surface and a second surface, first surface and the second surface are disposed opposite to each other, the first surface is connected to the protrusion, and the second surface is exposed from the protrusion.

The protrusion plays a role in supporting the electrode terminal, and a probability of the electrode terminal deforming due to force is small. In addition, electrical connection between another mechanism and the electrode terminal is facilitated.

In the above one or more optional implementations, at least a part of the first sealing portion is exposed from the bracket. This facilitates pressure relief of the battery cell.

In the above one or more optional implementations, the battery module further includes a fastener, and the temperature detection member and the bracket are fastened by using the fastener.

This further causes a position of the temperature detection member on the bracket to be more stable and a probability of the temperature detection member moving relative to the battery cell to be lower, so that a temperature value of the battery cell detected by the temperature detection member is more accurate.

In the above one or more optional implementations, the fastener is thermal conductive adhesive, and a thermal conductivity coefficient of the thermal conductive adhesive ranges from 0.8 W/(m·K) to 3.0 W/(m·K).

The thermal conductive adhesive can transmit the heat received from the electrode terminal to the temperature detection member through the bracket. In this case, a loss of the heat transmitted by the electrode terminal to the temperature detection member is small, so that a temperature detected by the temperature detection member is closer to an actual temperature of the electrode terminal. This further helps improve detection precision of the temperature of the battery cell.

In the above one or more optional implementations, the temperature detection member is in interference fit with the bracket.

This causes a position of the temperature detection member on the bracket to be more stable and a probability of the temperature detection member moving relative to the battery cell to be lower, so that a temperature value of the battery cell detected by the temperature detection member is more accurate.

In the above one or more optional implementations, the temperature detection member includes a temperature detector and a conducting wire, the temperature detector is connected to the conducting wire, the temperature detector and the conducting wire are fastened to the bracket, and the conducting wire is in a stretchable state.

When the battery cell expands and moves, the conducting wire can move with the battery cell. Because a probability of damage due to movement is small, higher flexibility is achieved.

In the above one or more optional implementations, the battery module further includes an elastic member, and the elastic member is located at at least one end of the battery cell assembly along a first direction; and the conducting wire is fixed to the elastic member.

The battery cell assembly abuts against the elastic member and the housing, so that a position of the battery cell assembly in the housing is more stable, and a probability of shaking is lower. This improves stability of electrical connection of the plurality of battery cell units, and reduces a possibility of damage to the battery cell unit due to collision with the housing. When the battery cell unit expands, the conducting wire can move with the elastic member, so that a position of the conducting wire is more stable.

In the above one or more optional implementations, the elastic member includes a base portion, a buffer portion, and a connection portion, the base portion is connected to the battery cell assembly, the buffer portion is connected to the connection portion and the base portion, the buffer portion is configured to provide an expansion space for the battery cell assembly, and the connection portion is fixed to the housing; and the conducting wire is fixed to the connection portion.

When the battery cell assembly expands and moves, the buffer portion is configured to provide an expansion space for the battery cell assembly, the movement of the battery cell assembly is more stable, and a possibility of damage to the battery cell assembly due to collision with the housing is low. A position of the conducting wire is more stable, and electrical connection to another mechanism is also more stable.

In the above one or more optional implementations, the bracket includes a second portion, the main body portion includes a first wall connected to the first sealing portion, and the second portion covers at least a part of the first wall; and the temperature detection member is disposed on the second portion.

When the battery cell unit bears force, the second portion bears force before at least a part of the first wall, so that the second portion plays a role in protecting the first wall. In addition, the second portion improves sealing strength of the first sealing portion, causing a low probability of part of the first sealing portion covered by the second portion breaking when the battery cell has not experienced thermal runaway.

In the above one or more optional implementations, the battery cell is a pouch battery cell.

In the above one or more optional implementations, the bracket is integrally formed with the battery cell. This improves strength of connection between the bracket and the battery cell.

In the above one or more optional implementations, the housing includes a top wall and a bottom wall, the top wall and the bottom wall are disposed opposite to each other along a third direction; and along a second direction, the bracket is configured to be movable relative to the bottom wall, where the second direction is perpendicular to the third direction.

When the battery cell expands, the battery cell can move within the housing, alleviating the following problem: Expansion is restricted because the battery cell cannot move; consequently, internal pressure of the battery cell is excessive.

In the above one or more optional implementations, the battery module includes a structural member, and the structural member is disposed between the bottom wall and the battery cell assembly and in direct contact with the battery cell assembly, where a coefficient of friction between the bracket and the structural member is less than a coefficient of friction between the battery cell unit and the bottom wall, and along the second direction, the battery cell unit is configured to move on the structural member.

Compared with a battery module in which a battery cell assembly is in direct contact with a housing (a battery cell unit directly generates friction with a bottom wall), the battery module in this application causes force of friction between the battery cell unit and the structural member to be smaller when the battery cell unit expands and moves on the structural member. In this way, wear of the battery cell unit is smaller, a possibility of damage to the battery cell unit is lower, and a possibility of problems such as liquid leakage or short circuit in the battery cell unit is reduced, prolonging service life of the battery module.

According to a second aspect, an embodiment of this application provides a battery pack, including a front cover and the battery module as described above. The front cover is connected to the housing.

In the above one or more optional implementations, the battery pack includes a circuit board, and the front cover is provided with a second space; and the circuit board is disposed in the second space, and the circuit board is connected to the battery cell assembly.

The disposed front cover plays a role in protecting the battery cell assembly and the circuit board and preventing dust. The disposed circuit board achieves control over charging and discharging of the battery cell assembly.

According to a third aspect, an embodiment of this application provides an electric device, including a load and at least one battery pack as described above. The battery pack supplies power to the load.

### DESCRIPTION OF DRAWINGS

The drawings to be used in some embodiments are briefly introduced below, so as to more clearly illustrate the technical solutions of embodiments of this application. It should be understood that the following drawings only illustrate some embodiments of this application, and therefore should not be regarded as limiting the scope. For persons of ordinary skill in the art, other related drawings may also be obtained based on these drawings.
FIG. 1 is a schematic diagram of a three-dimensional structure of a battery pack according to some embodiments of this application;
FIG. 2 is a schematic diagram of an exploded structure of a battery pack according to some embodiments of this application;
FIG. 3 is a schematic three-dimensional diagram of a structure of a battery module according to some embodiments of this application;
FIG. 4 is a schematic three-dimensional diagram of a partial structure of a battery pack according to some embodiments of this application;
FIG. 5 is a schematic diagram of a partially enlarged structure at position A of the battery pack in FIG. 4;
FIG. 6 is a schematic diagram of a three-dimensional structure of a battery cell unit and a temperature detection member of a battery pack according to some embodiments of this application;
FIG. 7 is a schematic diagram of a partially enlarged structure of the battery pack in FIG. 6;
FIG. 8 is a schematic diagram of a three-dimensional structure of a battery cell unit according to some embodiments of this application;
FIG. 9 is a schematic diagram of a partially enlarged structure according to other embodiments of this application;
FIG. 10 is a schematic diagram of a three-dimensional structure of a battery cell of a battery pack according to some embodiments of this application;
FIG. 11 is a schematic diagram of a three-dimensional structure of a partial structure of a battery pack according to some embodiments of this application;
FIG. 12 is a schematic diagram of a partially enlarged structure at position C of the battery pack in FIG. 11;
FIG. 13 is a schematic diagram of a three-dimensional structure from another perspective of a battery cell unit of a battery pack according to some embodiments of this application;
FIG. 14 is a schematic diagram of a three-dimensional structure of an elastic member of a battery pack according to some embodiments of this application; and
FIG. 15 is a schematic diagram of a partially enlarged structure at position D of the battery pack in FIG. 8.

Reference signs: 10. battery module; 11. housing; 1100. first space; 110. top wall; 120. bottom wall; 130. side wall; 12. battery cell assembly; 200. battery cell unit; 210. battery cell; 211. battery cell housing; 2111. main body portion; 2112. first sealing portion; 2113. first wall; 2114. second sealing portion; 212. electrode terminal; 2120. first section; 2120a. first surface; 2120b. second surface; 213. second electrode terminal; 220. bracket; 221. first portion; 2211. main body; 21120. end portion; 2212. protrusion; 2213. recess; 222. second portion; 223. first connection portion; 224. second connection portion; 231. third support portion; 232. fourth support portion; 2321. notch; 233. third connection portion; 234. fourth connection portion; 230. second bracket; 13. temperature detection member; 13a. temperature detector; 13b. conducting wire; 14. elastic member; 410. base portion; 420. buffer portion; 430. connection portion; 15. structural member; 20. front cover; 201. connector; 30. circuit board; X. first direction; Y. second direction; and Z. third direction.

### DETAILED DESCRIPTION OF EMBODIMENTS

To make the objectives, technical solutions, and advantages of this application clearer, the technical solutions in some embodiments of this application are clearly described below with reference to the drawings in embodiments of this application. It is clear that the described embodiments are some embodiments of this application, rather than all embodiments. Based on some embodiments in this application, all other embodiments obtained by persons of ordinary skill in the art belong to the scope of protection of this application.

Unless otherwise defined, all technical and scientific terms used in this application have the same meanings as commonly understood by persons skilled in the technical field to which this application belongs; the terms used in the specification of this application are only for the purpose of describing specific embodiments, and are not intended to limit this application; the terms "including" and "comprising" and any variations thereof in the specification, claims, and above description of drawings of this application are intended to cover non-exclusive inclusion.

The terms "first", "second", and the like in the specification and claims, or above drawings of this application are used to distinguish between different objects, and are not used to describe a specific order or primary-secondary relationship.

An "embodiment" mentioned in this application means that specific features, structures, or characteristics described with reference to this embodiment can be included in at least one embodiment of this application. The phrase appearing at various positions in the specification does not necessarily refer to the same embodiment, nor is it an independent or alternative embodiment that is mutually exclusive with other embodiments.

In embodiments of this application, same reference signs indicate same components, and for brevity, detailed descriptions of the same components in different embodiments are omitted. It should be understood that thicknesses, lengths, widths, and other dimensions of various components in some embodiments of this application shown in the drawings, as well as overall thicknesses, overall lengths, overall widths, and other overall dimensions of integrated devices, are only example illustrations and should not constitute any limitation on this application.

A battery cell includes an electrode assembly and an electrolyte. The electrode assembly includes a positive electrode plate, a negative electrode plate, and a separator. The battery cell operates mainly by relying on metal ions moving between the positive electrode plate and the negative electrode plate. The positive electrode plate includes a positive electrode current collector and a positive active substance layer, the positive active substance layer is coated on a surface of the positive electrode current collector, and a current collector not coated with the positive active substance layer serves as a positive electrode terminal. Taking a lithium-ion battery as an example, a material of the positive electrode current collector may be aluminum, and a positive active substance may be lithium cobalt oxide, lithium iron phosphate, ternary lithium, lithium manganate, or the like. The negative electrode plate includes a negative electrode current collector and a negative active substance layer, the negative active substance layer is coated on a surface of the negative electrode current collector, and a current collector not coated with the negative active substance layer serves as a negative electrode terminal. A material of the negative electrode current collector may be copper, and a negative active substance may be carbon, silicon, or the like. There are multiple positive electrode tabs and the positive electrode tabs are stacked together, and there are multiple negative electrode tabs and the negative electrode tabs are stacked together, so as to ensure that no fusing occurs when a large current passes. A material of the separator may be PP (polypropylene, polypropylene), PE (polyethylene, polyethylene), or the like.

The structure and materials of the above battery cell determine that heat is generated in a charging and discharging process of the battery cell, causing a temperature of the battery cell to rise. If the heat generated by the battery cell is excessive, not only damage or failure of the battery cell, but also short circuit, damage, or failure in other battery cells or mechanisms (such as circuit boards or conducting wires), and even a serious safety problem such as smoking, catching fire, or explosion may be caused. A temperature detection member may currently be disposed on the battery cell to monitor a temperature of the battery cell, so as to reduce a thermal runaway possibility of a battery module. However, directly disposing the temperature detection member on the battery cell results in poor stability of a position of the temperature detection member, and the temperature detection member is prone to moving relative to the battery cell or even detaching from the battery cell, causing poor accuracy of a temperature value detected by the temperature detection member and a high possibility of thermal runaway of the battery module.

This application provides a battery module, so as to improve battery module temperature detection accuracy. The battery module includes a housing, a battery cell assembly, and a temperature detection member. The housing is provided with a first space. The battery cell assembly is disposed in the first space, the battery cell assembly includes a plurality of battery cell units, the battery cell unit includes a battery cell and a bracket, the battery cell includes a battery cell housing, and the bracket wraps at least part of the battery cell housing. The temperature detection member is disposed on the bracket.

In this structured battery module, the housing plays a role in protecting the battery cell assembly and preventing dust; the battery cell assembly including the a plurality of battery cell units causes high energy density of the battery module; the bracket wrapping at least a part of the battery cell housing causes the bracket to bear, when at least a part of the cell bears force, force before the battery cell, playing a role in protecting the battery cell; the temperature detection member being disposed on the bracket causes a position of the temperature detection member to be stable and a probability of the temperature detection member moving relative to the battery cell to be low, so that accuracy of a temperature value of the battery cell detected by the temperature detection member is high. This helps accurately control charging and discharging of the battery cell based on the temperature value of the battery cell, and reduce a possibility of damage or failure of the battery module caused by thermal runaway of the battery cell.

An embodiment of this application provides a battery pack including a battery module. The battery pack may be a secondary battery or a primary battery, for example, a lithium-ion battery, a sodium-ion battery, or a magnesium-ion battery. This is not limited in some embodiments of this application. The battery pack may be cylindrical, flat, rectangular, or in another shape. This is also not limited in this embodiment of this application.

An embodiment of this application provides an electric device using at least one battery pack as a power source. The electric device may be but is not limited to a mobile phone, a tablet, a notebook computer, an electric toy, an electric tool, an electric bicycle, an electric vehicle, a ship, a spacecraft, or the like.

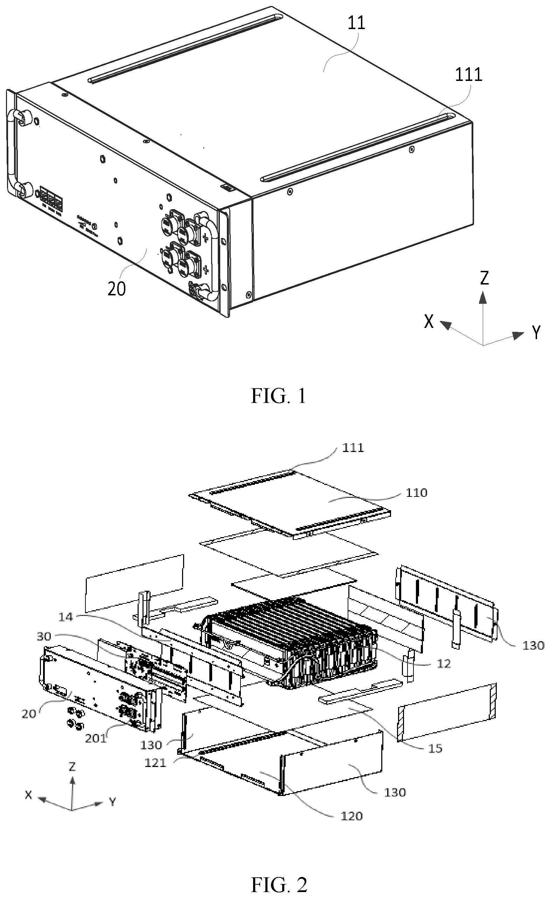

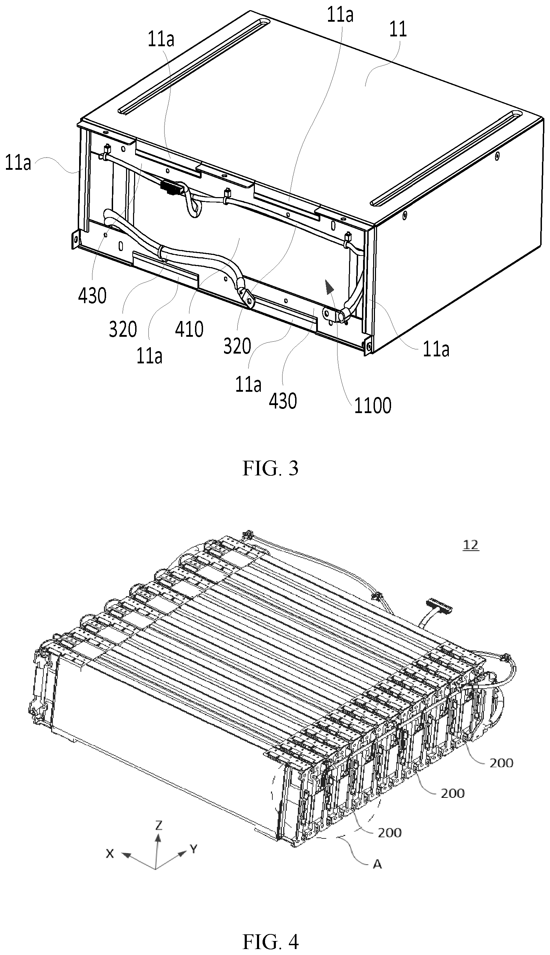

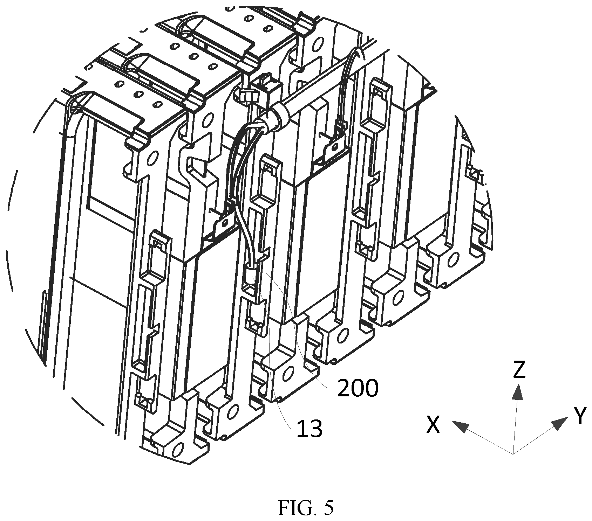

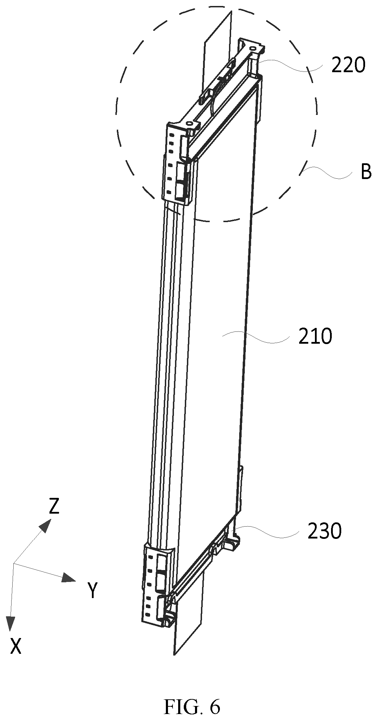

Refer to FIG. 1 to FIG. 6. FIG. 1 is a schematic diagram of a three-dimensional structure of a battery pack according to some embodiments of this application. FIG. 2 is a schematic diagram of an exploded structure of a battery pack according to some embodiments of this application. FIG. 3 is a schematic three-dimensional diagram of a structure of a battery module according to some embodiments of this application. FIG. 4 is a schematic three-dimensional diagram of a partial structure of a battery pack according to some embodiments of this application. FIG. 5 is a schematic diagram of a partially enlarged structure at position A of the battery pack in FIG. 4. FIG. 6 is a schematic diagram of a three-dimensional structure of a battery cell unit and a temperature detection member of a battery pack according to some embodiments of this application.

For ease of description, in the drawings, a part of electrode terminals is not shown in a bent state.

An embodiment of this application provides a battery module 10. The battery module 10 includes a housing 11 and a battery cell assembly 12. The housing 11 is provided with a first space 1100. The battery cell assembly 12 is disposed in the first space 1100, so that the housing 11 plays a role in protecting the battery cell assembly 12 and preventing dust.

In some embodiments, the housing 11 may be made of a material with high strength, such as a metal material like steel or aluminum alloy, so that the housing 11 has higher force-bearing performance and further has a lower possibility of deformation or damage due to force or an environmental change, and further reliability of the battery module 10 is higher.

In other embodiments, the housing 11 may alternatively be made of a non-metal material with high strength, such as carbon fiber or rigid plastic.

In some embodiments, the housing 11 may include a top wall 110, a bottom wall 120, and multiple side walls 130. The top wall 110and the multiple side walls 130 may be fastened by using connecting members (such as screws), the bottom wall 120 and the multiple side walls 130 may be fastened by using connecting members (such as screws).

In other embodiments, the top wall 110 and the multiple side walls 130 may alternatively be fastened through welding, adhesion, protrusion and recess limiting fit, or the like, the bottom wall 120 and the multiple side walls 130 may alternatively be fastened through welding, adhesion, protrusion and recess limiting fit, or the like.

In other embodiments, the top wall 110, the bottom wall 120, and the multiple side walls 130 may alternatively be integrally formed.

In some embodiments, the battery cell assembly 12 includes a plurality of battery cell units 200, so that energy density of the battery module 10 is large.

In some embodiments, the plurality of battery cell units 200 may be arranged along a second direction Y, so that the battery cell unit 200 moves relative to the housing 11 along the second direction Y when the battery cell 210 expands.

In some embodiments, a first direction X, the second direction Y, and a third direction Z are pairwise perpendicular. In other embodiments, a first direction X, the second direction Y, and a third direction Z may alternatively be pairwise intersecting.

In some embodiments, the battery cell unit 200 includes a battery cell 210 and a bracket 220, the battery cell 210 includes a battery cell housing 211, and the bracket 220 wraps at least a part of the battery cell housing 211, so that the bracket 220 bears force before the battery cell 210 when at least a part of the battery cell 210 bears force, playing a role in protecting the battery cell 210.

In some embodiments, a manner in which the bracket 220 wraps the battery cell housing 211 includes but is not limited to assembly, integral forming, spraying, or the like.

In some embodiments, the battery cell 210 may be rectangular, flat, cylindrical, or in another shape. This is not limited in this embodiment of this application.

In some embodiments, the battery cell 210 may be a pouch battery cell.

In other embodiments, the battery cell 210 may alternatively be a hard-shell battery cell.

In some embodiments, the bracket 220 may be integrally formed with the battery cell 210, improving strength of connection between the bracket 220 and the battery cell 210. The integral forming means that the bracket 220 is directly fastened to the battery cell 210. The integral forming method includes but is not limited to a pouring process, an injection molding process, or the like.

In some embodiments, after an insulating material is provided around the battery cell 210 by using the pouring process, the insulating material solidifies to form the bracket 220, and the bracket 220 is adhered and fastened to the battery cell 210. For example, the battery cell 210 is placed into a mold, the insulating material is poured into the mold, and after the insulating material solidifies to form the bracket 220 and is adhered and fastened to the battery cell 210, the bracket 220 and the battery cell 210 are taken out of the mold.

In some embodiments, the insulating material includes but is not limited to a potting compound or a foaming adhesive.

In some embodiments, the injection molding process includes: The battery cell 210 is placed into a mold, an injection molding device heats and melts an insulating material, the molten insulating material flows into the mold, and after the insulating material solidifies to form the bracket 220 and is adhered and fastened to the battery cell 210, the bracket 220 and the battery cell 210 are taken out of the mold. Optionally, the insulating material includes polyamide.

In some embodiments, the bracket 220 is an insulating bracket. This can reduce a risk of short circuit between the bracket 220 and the battery cell 210.

In other embodiments, the bracket 220 may alternatively be fastened to the battery cell 210 by using a structure such as a fastener or a buckle.

In some embodiments, the battery module 10 includes a temperature detection member 13, and the temperature detection member 13 is disposed on the bracket 220. In this way, a position of the temperature detection member 13 is stable, and a probability of the temperature detection member 13 moving relative to the battery cell 210 is low, so that accuracy of a temperature value of the battery cell 210 detected by the temperature detection member 13 is high. This helps accurately control charging and discharging of the battery cell 210 based on the temperature value of the battery cell 210, and reduce a possibility of damage or failure of the battery module 10 due to thermal runaway of the battery cell 210.

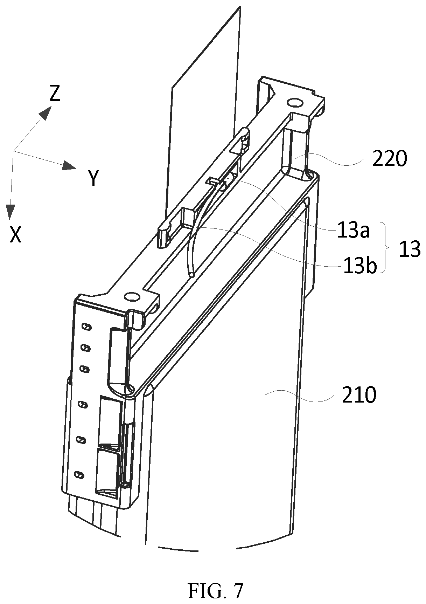

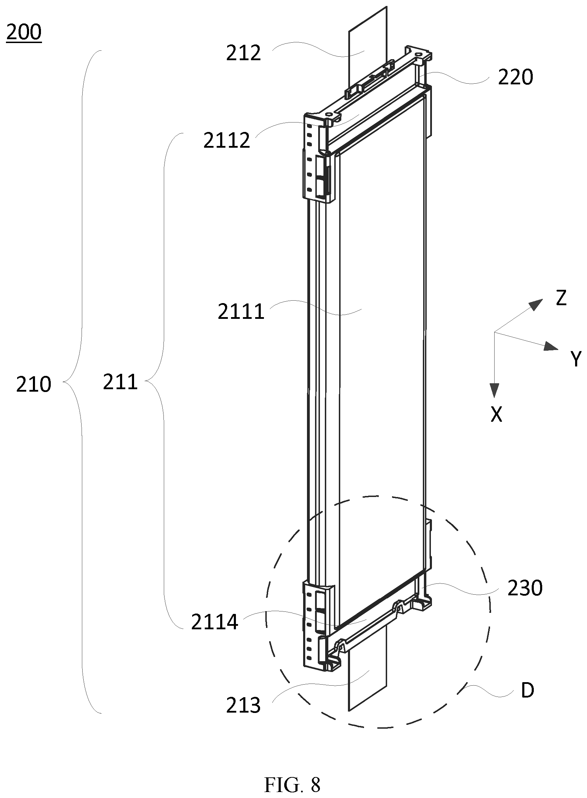

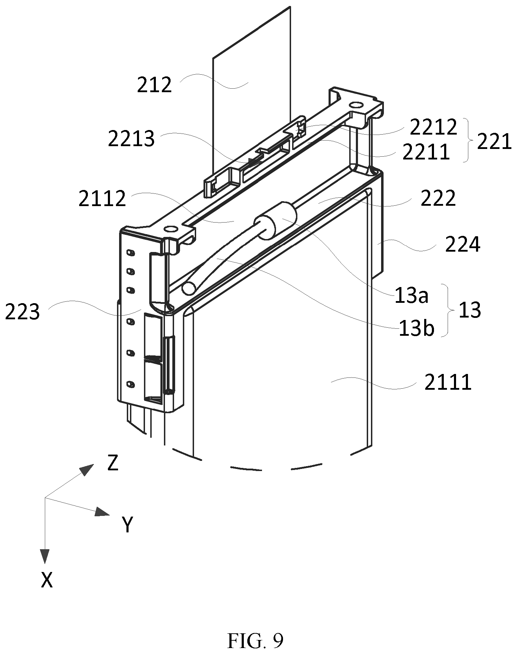

Refer to FIG. 6 to FIG. 9. FIG. 7 is a schematic diagram of a partially enlarged structure at position B of the battery pack in FIG. 6. FIG. 8 is a schematic diagram of a three-dimensional structure of a battery cell unit of a battery pack according to some embodiments of this application. FIG. 9 is a schematic diagram of a partially enlarged structure according to other embodiments of this application. A temperature detector 13a is disposed on a second portion 222.

In some embodiments, the battery cell 210 includes an electrode terminal 212, the battery cell housing 211 includes a main body portion 2111 and a first sealing portion 2112, and the electrode terminal 212 extends out of the battery cell housing 211 from the first sealing portion 2112, so that an external mechanism is electrically connected to the battery cell 210 through the electrode terminal 212.

In some embodiments, an electrode assembly (not shown) is disposed in the main body portion 2111.

In some embodiments, the bracket 220 covers at least a part of the first sealing portion 2112, and the electrode terminal 212 extends out from the bracket 220. In this case, when at least a part of the first sealing portion 2112 bears force, the bracket 220 bears force before the first sealing portion 2112, playing a role in protecting the first sealing portion 2112. In addition, the bracket 220 improves sealing strength of the first sealing portion 2112, causing a low probability of the first sealing portion 2112 breaking when the battery cell 210 has not experienced thermal runaway. A temperature detected by the temperature detection member 13 is caused to be close to a temperature of the electrode terminal 212, and this helps improve detection precision of a temperature of the battery cell 210 and reflect an actual temperature of the battery cell 210.

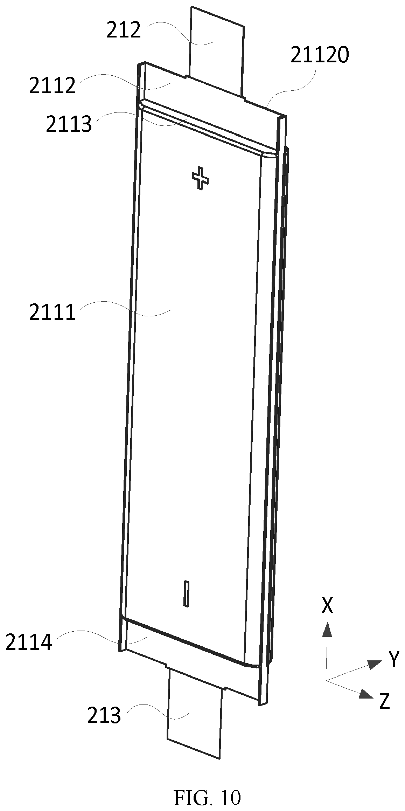

Refer to FIG. 10. FIG. 10 is a schematic diagram of a three-dimensional structure of a battery cell of a battery pack according to some embodiments of this application.

In some embodiments, the bracket 220 includes a first portion 221, the first sealing portion 2112 includes an end portion 21120, the end portion 21120 being facing away from the main body portion 2111, and the first portion 221 covers at least a part of the end portion 21120. In this case, when at least a part of the end portion 21120 bears force, the first portion 221 bears force before the end portion 21120, so that the first portion 221 plays a role in protecting the end portion 21120. In addition, the first portion 221 improves sealing strength of the first sealing portion 2112, causing a low probability of the end portion 21120 breaking when the battery cell 210 has not experienced thermal runaway.

In some embodiments, the temperature detection member 13 is disposed on the first portion 221. When the battery cell 210 expands, action force exerted by the battery cell 210 on the temperature detection member 13 is small, and a probability of damage to the battery cell 210 and the temperature detection member 13 is low. Moreover, this also helps assemble the temperature detection member 13 onto the battery cell unit 200 after the plurality of battery cell units 200 are assembled into the battery cell assembly 12.

In some embodiments, the first portion 221 includes a main body 2211 and a protrusion 2212, the protrusion 2212 protrudes from the main body 2211, and the main body 2211 covers the end portion 21120. The temperature detection member 13 is disposed on the protrusion 2212.

In some embodiments, the main body 2211 and the protrusion 2212 may be integrally formed.

In other embodiments, the main body 2211 may alternatively be fastened to the protrusion 2212 through adhesion, buckling, or the like.

When a temperature of the battery cell 210 is monitored and the temperature of the battery cell 210 is adjusted, a higher-temperature portion of the battery cell 210 is detected, and charging and discharging of the battery cell 210 are adjusted in a timely manner, thereby adjusting the temperature of the battery cell 210. This is a good monitoring method. In the charging and discharging process of the battery cell 210, the protrusion 2212 is in direct contact with the electrode terminal 212, and the temperature detection member 13 is disposed on the protrusion 2212, so that the temperature detection member 13 detected heat directly transmitted by the electrode terminal 212 through the protrusion 2212, with a low heat loss and a small impact on energy density of the battery module 10.

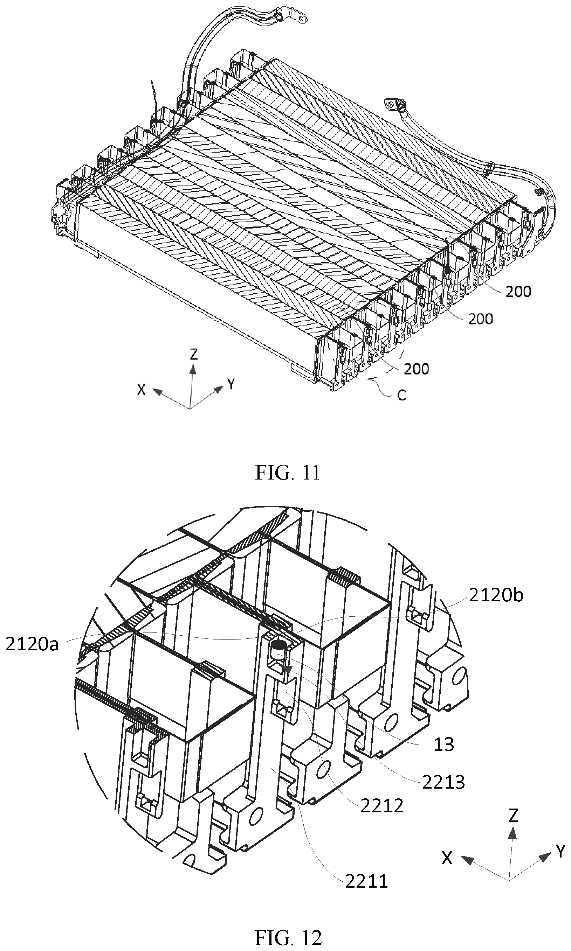

Refer to FIG. 11 and FIG. 12. FIG. 11 is a schematic diagram of a three-dimensional structure of a partial structure of a battery pack according to some embodiments of this application; FIG. 12 is a schematic diagram of a partially enlarged structure at position C of the battery pack in FIG. 11.

In some embodiments, the protrusion 2212 is provided with a recess 2213, and the temperature detection member 13 is disposed in the recess 2213 In this way, a position of the temperature detection member 13 on the bracket 220 is more stable, and a probability of the temperature detection member 13 moving relative to the battery cell 210 is lower, so that accuracy of a temperature value of the battery cell 210 detected by the temperature detection member 13 is higher. Moreover, a probability of interference between the temperature detection member 13 and another mechanism is also lower.

In some embodiments, an opening direction of the recess 2213 is parallel to the second direction Y and faceing away from the electrode terminal 212, so that when the detection detector 13 is disposed in the recess 2213, the detection detector 13 is located on a side of the protrusion 2212 facing away from the electrode terminal 212.

In other embodiments, an opening direction of the recess 2213 may alternatively be parallel to the first direction X and facing away from the battery cell 210, or an opening direction of the recess 2213 may alternatively be parallel to the third direction Z.

In other embodiments, no protrusion 2212 may alternatively be provided, and a recess 2213 is provided on the main body 2211, so that the temperature detection member 13 is disposed in the recess 2213.

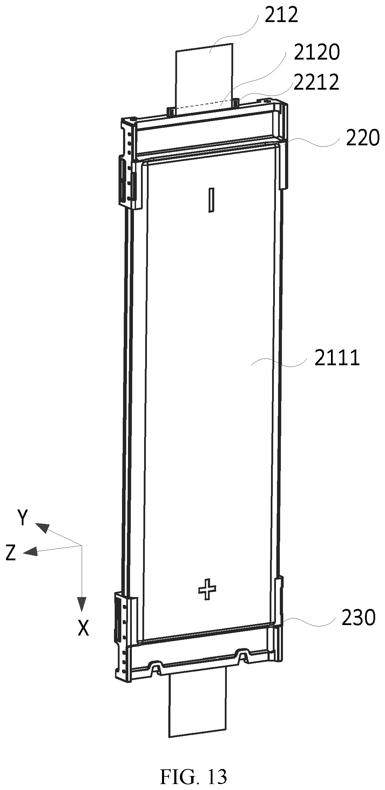

Refer to FIG. 8, FIG. 12, and FIG. 13. FIG. 13 is a schematic diagram of a three-dimensional structure from another perspective of a battery cell unit of a battery pack according to some embodiments of this application.

In some embodiments, the electrode terminal 212 includes a first section 2120, and the first section 2120 is connected to the protrusion 2212. The first section 2120 includes a first surface 2120a and a second surface 2120b, the first surface 2120a and the second surface 2120b are disposed opposite to each other, the first surface 2120a is connected to the protrusion 2212, and the second surface 2120b is exposed from the protrusion 2212. In this way, the protrusion 2212 plays a role in supporting the electrode terminal 212, and a probability of the electrode terminal 212 deforming due to force is small. In addition, electrical connection between another mechanism and the electrode terminal 212 is facilitated.

In some embodiments, along the second direction Y, the electrode terminal 212 is connected to one side of the protrusion 2212, and the temperature detection member 13 is disposed on the other side of the protrusion 2212. In this case, when heat of the electrode terminal 212 is transmitted to the temperature detection member 13 through the protrusion 2212, a transmission distance is shorter and a heat loss is less, so that a temperature detected by the temperature detection member 13 is closer to a temperature of the electrode terminal 212. This helps further improve detection precision of the temperature of the battery cell 210.

In other embodiments, the temperature detection member 13 may alternatively be disposed on one side of the protrusion 2212 along the first direction X, or on one side of the protrusion 2212 along the third direction Z.

In some embodiments, at least a part of the first sealing portion 2112 is exposed from the bracket 220. This facilitates pressure relief of the battery cell 210.

In some embodiments, the battery module 10 includes a fastener (not shown), and the temperature detection member 13 is fixed to the bracket 220 by using the fastener. In this way, a position of the temperature detection member 13 on the bracket 220 is more stable, and a probability of the temperature detection member 13 moving relative to the battery cell 210 is lower, so that accuracy of the temperature value of the battery cell 210 detected by the temperature detection member 13 is higher.

In some embodiments, the fastener may be a thermal conductive adhesive, and a thermal conductivity coefficient of the thermal conductive adhesive ranges from 0.8 W/(m·K) to 3.0 W/(m·K), such as 0.8 W/(m·K), 1.4 W/(m·K), or 3.0 W/(m·K). The thermal conductive adhesive may transmit heat received from the electrode terminal 212 to the temperature detection member 13 through the bracket 220. In this case, a loss of the heat transmitted by the electrode terminal 212 to the temperature detection member 13 is small, so that a temperature detected by the temperature detection member 13 is closer to an actual temperature of the electrode terminal 212. This helps further improve detection precision of a temperature of the battery cell 210.

In other embodiments, the fastener may alternatively be another adhesive, the adhesive is connected to a portion of the temperature detection member 13, the portion of the temperature detection member 13 being a portion facing towards the bracket 220, to reduce a heat loss caused by the adhesive and improve detection precision of a temperature of the battery cell 210.

In other embodiments, the fastener may alternatively be a fastening structure such as an elastic buckling member or a clamping slot.

In other embodiments, the temperature detection member 13 may be in interference fit with the bracket 220. In this way, a position of the temperature detection member 13 on the bracket 220 is more stable, and a probability of the temperature detection member 13 moving relative to the battery cell 210 is lower, so that accuracy of the temperature value of the battery cell 210 detected by the temperature detection member 13 is higher.

In some embodiments, the temperature detection member 13 includes a temperature detector 13a and a conducting wire 13b, the temperature detector 13a is connected to the conducting wire 13b, the temperature detector 13a is fixed to the bracket 220, and the conducting wire 13b is fixed to the bracket 220.

In some embodiments, the temperature detector 13a and the conducting wire 13b are fastened to the same bracket 220.

In some embodiments, the temperature detector 13a and the conducting wire 13b may be fastened to different brackets 220.

In some embodiments, a part of the conducting wire 13b and the temperature detector 13a are fastened to the same bracket 220, and a part of the conducting wire 13b is further fastened to another bracket 220.

In some embodiments, refer to FIG. 5. The temperature detector 13a is fixed to a first portion 221, and the conducting wire 13b is fixed to a first portion 221. This helps reduce force on the temperature detector 13a. Optionally, the temperature detector 13a and the conducting wire 13b are fastened to the first portion 221 of the same bracket 220.

In some embodiments, the temperature detector 13a may be an NTC (Negative Temperature Coefficient, negative temperature coefficient) sensor. In this way, a size of the temperature detector 13a is small, a space occupied by the temperature detector 13a is small, and an impact on energy density of the battery module 10 is reduced. Moreover, detection precision of the NTC temperature sensor is high, and this helps perform timely adjustment based on a detected temperature value and reduce a possibility of thermal runaway of the battery module 10. In some embodiments, the temperature detector 13a is provided in a cylindrical shape.

In other embodiments, the temperature detection member 13 may alternatively be provided in a square shape, a spherical shape, or another shape.

In other embodiments, the temperature detector 13a may alternatively be a PTC (Positive Temperature Coefficient, positive temperature coefficient) sensor, or the like.

In some embodiments, the conducting wire 13b is in a stretchable state. In this case, when the battery cell 210 expands and moves, the conducting wire 13b can move with the battery cell 210, so that a probability of damage due to movement is smaller, flexibility and is higher.

Refer to FIG. 2 and FIG. 3. In some embodiments, the battery module 10 may include an elastic member 14, and the elastic member 14 is located at at least one end of the battery cell assembly 12 along the second direction Y. In this case, the battery cell assembly 12 abuts against the elastic member 14 and the housing 11, so that a position of the battery cell assembly 12 in the housing 11 is more stable, and a probability of shaking is low, thereby improving stability of electrical connection of the plurality of battery cell units 200, and reducing a possibility of damage to the battery cell unit 200 due to collision with the housing 11.

In some embodiments, the elastic member 14 is configured to provide an expansion space for the battery cell assembly 12.

In some embodiments, there is one elastic member 14. In this case, the battery cell assembly 12 keeps abutting against the elastic member 14 and the housing 11 before and after expansion, and the elastic member 14 occupies a small space. This helps improve energy density of the battery module 10.

In other embodiments, there may be two elastic members 14. The two elastic members 14 are respectively located at two ends of the battery cell assembly 12 along the second direction Y. When all of the plurality of battery cell units 200 expand, the battery cell units 200 can move toward the two ends of the battery cell assembly 12 along the second direction Y, so that a movement distance of the battery cell units 200 close to the two ends of the battery cell assembly 12 along the second direction Y is short, wear of the battery cell units 200 close to the two ends of the battery cell assembly 12 along the second direction Y is reduced, and service life of the battery module 10 is prolonged.

In some embodiments, the conducting wire 13b is fixed to the elastic member 14, so that when the battery cell unit 200 expands, the conducting wire 13b can move with the elastic member 14. In this way, a position of the conducting wire 13b is more stable.

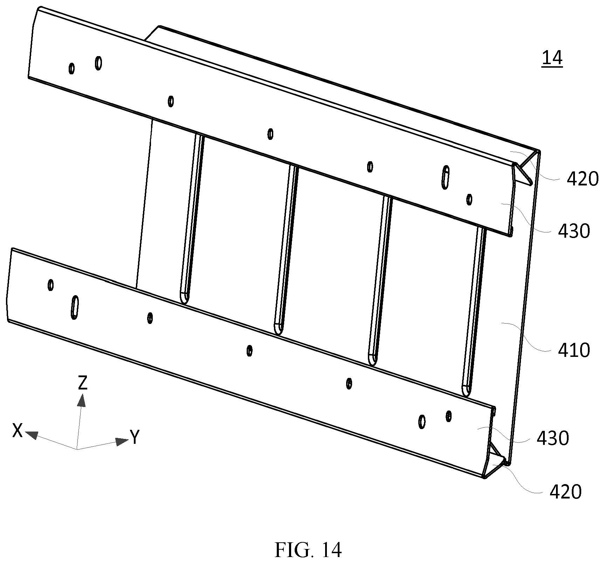

Refer to FIG. 14, FIG. 14 is a schematic diagram of a three-dimensional structure of an elastic member of a battery pack according to some embodiments of this application.

In some embodiments, the elastic member 14 includes a base portion 410, a buffer portion 420, and a connection portion 430, the base portion 410 is connected to the battery cell assembly 12, the buffer portion 420 is connected to the connection portion 430 and the base portion 410, and the connection portion 430 is fixed to the housing 11. When the battery cell assembly 12 expands and moves, the buffer portion 420 is configured to provide an expansion space for the battery cell assembly 12, so that movement of the battery cell assembly 12 is more stable, and a possibility of damage to the battery cell assembly 12 due to collision with the housing 11 is lower.

In some embodiments, the conducting wire 13b is fixed to the connection portion 430. In this way, a position of the conducting wire 13b is more stable, and electrical connection to another mechanism is more stable.

In some embodiments, the base portion 410 is in direct contact with and connected to the battery cell assembly 12.

In some embodiments, another component is disposed between the base portion 410 and the battery cell assembly 12, and the base portion 410 is connected to the battery cell assembly 12 by using another component. For example, the base portion 410 is connected to the battery cell assembly 12 by using a buffer member. Optionally, the buffer member includes foam.

In some embodiments, the elastic member 14 is disposed in the housing 11, facilitating disassembly and maintenance of the battery module 10.

In some embodiments, the connection portion 430 is fixed to the housing 11.

In some embodiments, the fastening includes but is not limited to abutment, adhesion, welding, locking and fastening via a securing member, buckling connection, or the like.

In some embodiments, multiple fastening portions 11a are disposed on the housing 11, and the connection portion 430 is fixed to the fastening portion 11a. Optionally, the connection portion 430 abuts against the fastening portion 11a.

In some embodiments, the multiple fastening portions 11a are disposed at one end that is along the second direction Y and that is of the top wall 110, the bottom wall 120, and side walls 130 that are disposed opposite to each other along the first direction X. One end of the battery cell assembly 12 facing away from the elastic member 14 along the second direction Y abuts against another side wall 130, and the connection portion 430 abuts against the fastening portion 11a to fasten the battery cell assembly 12 and the elastic member 14 between the fastening portion 11a and the another side wall 130.

Refer to FIG. 8 and FIG. 10. In some embodiments, the bracket 220 includes a second portion 222, the main body portion 2111 includes a first wall 2113 connected to the first sealing portion 2112, and the second portion 222 covers at least a part of the first wall 2113. In this case, when the battery cell unit 200 bears force, the second portion 222 bears force before the at least a part of the first wall 2113, so that the second portion 222 plays a role in protecting the first wall 2113. In addition, the second portion 222 improves sealing strength of the first sealing portion 2112, causing a low probability of the part of the first sealing portion 2112 covered by the second portion 222 breaking when the battery cell 210 has not experienced thermal runaway.

In other embodiments, the temperature detection member 13 may alternatively be disposed on the second portion 222.

In some embodiments, the first portion 221 and the second portion 222 are spaced apart from each other along the first direction X, and a part of the first sealing portion 2112 is allowed to be exposed between the first portion 221 and the second portion 222, reserving a space for expansion of the first sealing portion 2112 and reducing a possibility of gas inside the first sealing portion 2112 destroying the first sealing portion 2112 or the bracket 220.

In some embodiments, the bracket 220 includes a first connection portion 223, and the first connection portion 223 is connected to the first portion 221 and the second portion 222, so that force-bearing performance of the bracket 220 is better, an overall structure of the bracket 220 is more stable, a covering status of the first portion 221 and the second portion 222 for the first sealing portion 2112 is more stable, and a probability of the first portion 221 and the second portion 222 displacing or even detaching from the first sealing portion 2112 relative to the first sealing portion 2112 is smaller.

In some embodiments, the bracket 220 includes a second connection portion 224, and the second connection portion 224 is connected to the first portion 221 and the second portion 222, so that force-bearing performance of the bracket 220 is better, an overall structure of the bracket 220 is more stable, a covering status of the first portion 221 and the second portion 222 for the first sealing portion 2112 is more stable, and a probability of the first portion 221 and the second portion 222 displacing or even detaching from the first sealing portion 2112 relative to the first sealing portion 2112 is smaller.

In some embodiments, the bracket 220 includes a first connection portion 223 and a second connection portion 224, and the first connection portion 223 and the second connection portion 224 are spaced apart from each other along the third direction Z.

In some embodiments, the first portion 221, the second portion 222, the first connection portion 223, and the second connection portion 224 may be integrally formed.

In other embodiments, the first portion 221, the second portion 222, the first connection portion 223, and the second connection portion 224 may alternatively be fastened through adhesion, buckling, or the like.

In some embodiments, the first connection portion 223 is connected to one end of the first portion 221 and the second portion 222 along the third direction Z, and the second connection portion 224 is connected to the other end of the first portion 221 and the second portion 222 along the third direction Z.

In other embodiments, the first connection portion 223 and the second connection portion 224 may alternatively be connected between two ends of the first portion 221 and the second portion 222 along the third direction Z, so that a structure of the bracket 220 is more stable, and a probability of deformation is lower.

In some embodiments, along the third direction Z, the first connection portion 223 and the second connection portion 224 protrude from the battery cell 210, so that when the battery cell unit 200 bears force along the third direction Z, the bracket 220 bears force before the battery cell 210, playing a role in protecting the battery cell 210.

In some embodiments, the temperature detection member 13 is disposed on the battery cell unit 200 near the middle of the battery module 10.

Among the plurality of battery cell assemblies 12, battery cell units 200 near the middle of the battery module 10 generate more heat. Therefore, the temperature detection member 13 detect a temperature of a battery cell unit 200 with a highest temperature by disposing the temperature detection member 13 on the battery cell units 200 near the middle of the battery module 10. This helps improve detection precision of a temperature of the battery cell 210, so as to reduce a temperature of the battery module 10 in a timely manner by controlling charging and discharging of the battery cell 210 and further reduce a possibility of thermal runaway of the battery module 10.

In some embodiments, there may be multiple temperature detection members 13. The multiple temperature detection members 13 are respectively disposed on the plurality of battery cell units 200, where at least one temperature detection member 13 is disposed near the middle of the battery module 10, so that a detection result is more accurate.

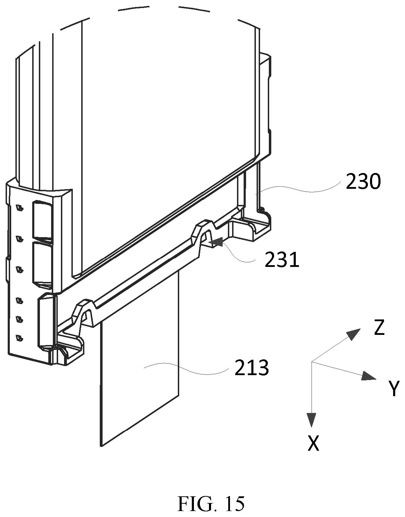

Refer to FIG. 8, FIG. 9, and FIG. 15. FIG. 15 is a schematic diagram of a partially enlarged structure at position D of the battery pack in FIG. 8.

In some embodiments, the battery cell housing 211 includes a second sealing portion 2114, and the first sealing portion 2112 and the second sealing portion 2114 are respectively located at two ends of the battery cell housing 211 along the first direction X. The battery cell 210 includes a second electrode terminal 213, and the second electrode terminal 213 is connected to the electrode assembly and extends out of the second sealing portion 2114, so that another mechanism is electrically connected to the electrode assembly by using the second electrode terminal 213.

In some embodiments, the battery unit 200 includes a second bracket 230, and the second bracket 230 is connected to the second sealing portion 2114. In some embodiments, the bracket 220 and the second bracket 230 have a same structure.

In some embodiments, the bracket 220 and the second bracket 230 are similar, so repeated descriptions of constructions identical or similar to those of the bracket 220 in the foregoing implementations are omitted, and in the following, structures different from those in the foregoing implementations are focused on.

In some embodiments, the second bracket 230 is provided with a notch 231, and a part of the second sealing portion 2114 is located in the notch 231, so that when the battery cell 210 expands, pressure inside the battery cell 210 can be discharged through the part of the second sealing portion 2114 in the notch 231. This facilitates pressure relief of the battery cell 210 and reduces a possibility of thermal runaway of the battery cell unit 200.

In some embodiments, the notch 231 and the temperature detection member 13 are disposed on different brackets, reducing a risk of damaging the temperature detection member 13 during pressure relief.

In some embodiments, the bracket 220 may be provided with the notch 231 as shown in the second bracket 230.

In some embodiments, the second bracket 230 is not provided with the protrusion 2212 as shown in FIG. 9.

In some embodiments, along the second direction Y, the bracket 220 is configured to be movable relative to the bottom wall 120, so that when the battery cell 210 expands, the battery cell 210 can move within the housing 11, alleviating the following problem: Expansion is restricted because the battery cell 210 cannot move; consequently, internal pressure of the battery cell 210 is excessive.

In some embodiments, the bottom wall 120 carries the battery cell unit 200.

In some embodiments, the battery module 10 includes a structural member 15, and the structural member 15 is disposed between the bottom wall 120 and the battery cell assembly 12 and in direct contact with the battery cell assembly 12.

In some embodiments, a coefficient of friction between the bracket 220 and the structural member 15 is less than a coefficient of friction between the battery cell unit 200 and the bottom wall 120, and along the second direction Y, the battery cell unit 200 is configured to move on the structural member 15. Compared with a battery module in which a battery cell assembly 12 is in direct contact with a housing 11 (a battery cell unit 200 directly generates friction with a bottom wall 120), the battery module 10 in this application causes smaller force of friction between the battery cell unit 200 and the structural member 15 when the battery cell unit 200 expands and moves on the structural member 15. In this way, wear of the battery cell unit 200 is smaller, a possibility of damage to the battery cell unit 200 is lower, and a possibility of problems such as liquid leakage or short circuit in the battery cell unit 200 is reduced, prolonging service life of the battery module 10.

In some embodiments, an insulating layer is provided on a surface of the structural member 15 facing the battery cell assembly 12, enhancing insulation between the battery cell assembly 12 and the bottom wall 120. Refer to FIG. 1 and FIG. 2. In some embodiments, two first limiting portions 121 are disposed on the bottom wall 120, the two first limiting portions 121 extend along the second direction Y, the two first limiting portions 121 are spaced apart from each other along the first direction X, and a part of the battery cell assembly 12 is disposed between the two first limiting portions 121 along the first direction X, so that the two first limiting portions 121 play a role in limiting the battery cell assembly 12, the battery cell assembly 12 moves along the second direction Y when expanding, and an overall structure of the battery module 10 is more stable.

In some embodiments, the first limiting portion 121 may be formed by a part of the bottom wall 120 recessing toward the battery cell assembly 12, and is easy to prepare.

In other embodiments, the first limiting portion 121 may alternatively be fastened to the bottom wall 120 through adhesion, welding, or the like.

In some embodiments, two second limiting portions 111 are disposed on the top wall 110, the two second limiting portions 111 extend along the second direction Y, the two second limiting portions 111 are spaced apart from each other along the first direction X, and a part of the battery cell assembly 12 is disposed between the two second limiting portions 111 along the first direction X. In this way, the two second limiting portions 111 play a role in limiting the battery cell assembly 12, the battery cell assembly 12 moves along the second direction Y when expanding, and an overall structure of the battery module 10 is more stable.

In some embodiments, the second limiting portion 111 may be formed by a part of the top wall 110 recessing toward the battery cell assembly 12, and is easy to prepare.

In other embodiments, the second limiting portion 111 may alternatively be fastened to the top wall 110 through adhesion, welding, or the like.

Refer to FIG. 1 and FIG. 2. An embodiment of this application provides a battery pack. The battery pack includes a front cover 20 and the battery module 10 provided in any of the above embodiments, and the front cover 20 is connected to the housing 11.

In some embodiments, the front cover 20 may be made of a material with high strength, such as a metal material like steel or aluminum alloy, so that the front cover 20 has higher performance and further has a lower possibility of deformation or damage due to force or an environmental change, and further reliability of the battery module 10 is higher.

In other embodiments, the front cover 20 may alternatively be made of a non-metal material with high strength, such as carbon fiber or rigid plastic.

In some embodiments, the housing 11 may alternatively be fastened to the front cover 20 by connecting members (such as screws).

In other embodiments, the housing 11 may alternatively be fastened to the front cover 20 by using another method such as welding, adhesion, or interference fit.

In some embodiments, the battery pack includes a circuit board 30, the front cover 20 is provided with a second space, the circuit board 30 is disposed in the second space, and the circuit board 30 is connected to the battery cell assembly 12. The disposed front cover 20 plays a role in protecting the battery cell assembly 12 and the circuit board 30 and prevents dust. The disposed circuit board 30 controls charging and discharging of the battery cell assembly 12.

In some embodiments, a connector 201 is further provided on the front cover 20, and the connector 201 is connected to the circuit board 30, so that an external device is electrically connected to the circuit board 30 by using the connector 201.

In some embodiments, the circuit board 30 may include a printed circuit board (PCB, Printed Circuit Board).

In other embodiments, the circuit board 30 may include a flexible printed circuit (FPC, Flexible Printed Circuit).

In some embodiments, the temperature detection member 13 may be electrically connected to the circuit board 30 by using a conducting wire.

An embodiment of this application provides an electric device. The electric device includes a load and at least one battery pack provided in any of the above embodiments, and the battery pack supplies power to the load.

The electric device may be any device or system that uses the battery pack as described above.

It should be noted that, in the case of no conflict, some embodiments in this application and the features in embodiments can be combined with each other.

The above are only preferred embodiments of this application and are not used to limit this application. For persons skilled in the art, this application can have various changes and modifications. Any modification, equivalent replacement, improvement, and the like made within the spirit and principles of this application shall be included in the protection scope of this application.

## Claims

1. A battery module, comprising:
a housing provided with a first space;
a battery cell assembly disposed in the first space, wherein the battery cell assembly comprises a plurality of battery cell units, each battery cell unit comprises a battery cell and a bracket, the battery cell comprises a battery cell housing, and the bracket wraps at least a part of the battery cell housing; and
a temperature detection member is disposed on the bracket.

2. The battery module according to claim 1, wherein the battery cell further comprises an electrode terminal, the battery cell housing comprises a main body portion and a first sealing portion, and the electrode terminal extends out of the battery cell housing from the first sealing portion; and
the bracket covers at least a part of the first sealing portion, and the electrode terminal extends out from the bracket.

3. The battery module according to claim 2, wherein the bracket comprises a first portion, the first sealing portion comprises an end portion the end portion being facing away from the main body portion, and the first portion covers at least a part of the end portion; and
the temperature detection member is disposed on the first portion.

4. The battery module according to claim 3, wherein the first portion comprises a main body and a protrusion, the protrusion protrudes from the main body, and the main body covers the end portion; and
the temperature detection member is disposed on the protrusion.

5. The battery module according to claim 4, wherein the protrusion is provided with a recess, and the temperature detection member is disposed in the recess.

6. The battery module according to claim 4 or 5, wherein the electrode terminal comprises a first section, and the first section is connected to the protrusion; and
the first section comprises a first surface and a second surface the first surface and the second surface are disposed opposite to each other, the first surface is connected to the protrusion, and the second surface is exposed from the protrusion.

7. The battery module according to any one of claims 2 to 6, wherein at least a part of the first sealing portion is exposed from the bracket.

8. The battery module according to any one of claims 1 to 7, wherein the battery module further comprises a fastener, and the temperature detection member and the bracket are fastened by using the fastener.

9. The battery module according to claim 8, wherein the fastener is a thermal conductive adhesive, and a thermal conductivity coefficient of the thermal conductive adhesive ranges from 0.8 W/(m·K) to 3.0 W/(m·K).

10. The battery module according to any one of claims 1 to 9, wherein the temperature detection member is in interference fit with the bracket.

11. The battery module according to any one of claims 1 to 10, wherein the temperature detection member comprises a temperature detector and a conducting wire, the temperature detector is connected to the conducting wire, the temperature detector and the conducting wire are fastened to the bracket, and the conducting wire is in a stretchable state.

12. The battery module according to claim 11, wherein the battery module further comprises an elastic member, and the elastic member is located at at least one end of the battery cell assembly along the first direction; and
the conducting wire is fixed to the elastic member.

13. The battery module according to claim 12, wherein the elastic member comprises a base portion, a buffer portion, and a connection portion; the base portion is connected to the battery cell assembly, the buffer portion is connected to the connection portion and the base portion, the buffer portion is configured to provide an expansion space for the battery cell assembly, and the connection portion is fixed to the housing; and
the conducting wire is fixed to the connection portion.

14. The battery module according to any one of claims 2 to 13, wherein the bracket comprises a second portion, the main body portion comprises a first wall connected to the first sealing portion, and the second portion covers at least a part of the first wall; and
the temperature detection member is disposed on the second portion.

15. The battery module according to any one of claims 1 to 14, wherein the battery cell is a pouch battery cell.

16. The battery module according to any one of claims 1 to 15, wherein the bracket is integrally formed with the battery cell.

17. The battery module according to any one of claims 1 to 16, wherein the housing comprises a top wall and a bottom wall the top wall and a bottom wall are disposed opposite to each other along a third direction; and
along a second direction, the bracket is configured to be movable relative to the bottom wall,
wherein the second direction is perpendicular to the third direction.

18. The battery module according to claim 17, wherein the battery module comprises a structural member, and the structural member is disposed between the bottom wall and the battery cell assembly and in direct contact with the battery cell assembly,
wherein a coefficient of friction between the bracket and the structural member is less than a coefficient of friction between the battery cell unit and the bottom wall, and along the second direction, the battery cell unit is configured to move on the structural member.

19. A battery pack, comprising a front cover and the battery module according to any one of claims 1 to 18, wherein the front cover is connected to the housing.

20. The battery pack according to claim 19, wherein the battery pack comprises a circuit board, and the front cover is provided with a second space; and
the circuit board is disposed in the second space, and the circuit board is connected to the battery cell assembly.

21. An electric device, comprising a load and at least one battery pack according to claim 19 or 20, wherein the battery pack supplies power to the load.
